# EUROPEAN PATENT SPECIFICATION

(11) **EP 0 741 475 B1**
(45) Date of publication and mention of the grant of the patent: **11.08.2004**
(21) Application number: 95202682.1
(22) Date of filing: 06.10.1995
(51) Int. Cl.: H04L 12/56, H04Q 11/04

(54) **Communication system with tagging facility**
Kommunikationssystem mit Markierungsanlage
Système de communication avec dispositif de marquage

(30) Priority: 01.05.1995 EP 95201122
(43) Date of publication of application: 06.11.1996
(73) Proprietor: Koninklijke KPN N.V., 9726 AE Groningen (NL)
(72) Inventor: Benchellal, Azeddine, NL-2625 VH Delft (NL)

(56) References cited:
- US-A- 4 769 810
- US-A- 5 394 396
- TRENTACOSTE C.: "ATM User-Network Interface Specification - Version 3.0" 1993 , PTR PRENTICE HALL , ENGLEWOOD CLIFFS, NEW JERSEY 07632, US XP002096206 * page 5, paragraph 1.5 - page 6 * * page 98 - page 100 * * page 171 * * page 201 - page 206 *

## Description

### BACKGROUND OF THE INVENTION

The invention relates to a method for the transmission of datacells via virtual channels of an ATM network system, with a priority code as well as a first tagging bit, both being assignable to the datacells of such channel, the system comprising bandwidth control devices at network edges, for the enforcement of the allowed cellrate, such bandwidth control device admitting said datacells as long as the actual cellrate does not exceed said allowed cellrate, or, if the actual cellrate does exceed said allowed cellrate, admitting said datacells, however, after modifying its priority code into a lower priority code.

Such a communication system is known from US4769810 of AT&T. In that disclosure said priority-lowering mechanism is called "marking". Meanwhile, said mechanism has been adopted by the ITU (Recommendations I.371 and Q.2961) and is known there as "tagging". According to the ITU Recommendations, the "Cell Loss Priority" code CLP(0) has to be modified into CLP(1) (=low priority) whenever the cellrate exceeds the maximum cellrate as allowed by the "Traffic Contract" between the user and the network operator. In the case the CLP is already CLP(1), such low priority datacells causing a crossing of the maximum allowed cellrate threshold, will be discarded.

Tagging is to be requested by users to decrease the probability of losing cells in the network. In the current recommendation Q.2961.1 the calling user may request tagging for the forward direction at the originating interface and the called user may request tagging for the backward direction at the destination (called user) interface. Since the tagging option is an additional service that can be offered besides the basic service, the network operator may request separate tariff for this service. When a call is established the calling user is the one who gets charged for that call.

Prior-art disclosure Trentacoste C., "ATM User-Network Interface Specification - Version 3.0" 1993, PTR Prentice Hall, US, discloses that, for use in a bidirectional set of virtual channels, comprising a first, forward channel from a calling user to a called user and a second, backward channel from the called user to the calling user, besides said first tagging bit, indicated as "Tagging Forward" bit, a second tagging bit indicated as "Tagging Backward" bit, is assignable to said datacells of the first channel, which second tagging bit relates to said backward channel.

### SUMMARY OF THE INVENTION

Since the calling user is charged for the requested call and connection, it is justified to give the calling user the possibility to invite or warn the called user for requesting tagging for the backward direction. This service comprises a technical problem, which is solved by the measures as disclosed in claims 1 and 2. The problem is how to use only two bits (viz. the "Tagging Forward" bit and the "Tagging Backward" bit), reserved for tagging in the ATM Traffic Descriptor information element (part of the ATM datacell header), to request tagging for both forward and backward direction by the calling user. To solve this problem coding values of these bits are needed and procedures have to be described.

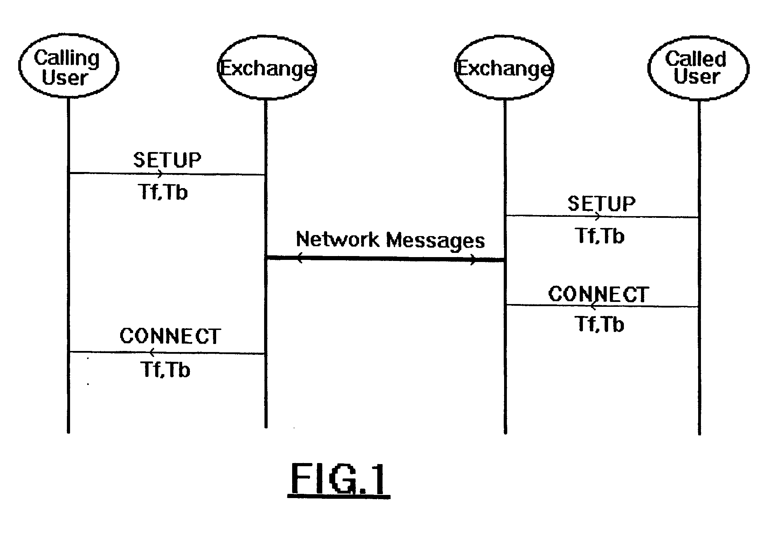

In the octet 19.1 of the ATM Traffic Descriptor information element there are two spare bits used for the tagging option. These two bits are named Tf (Tagging Forward) and Tb (Tagging Backward). These two bits can be coded as follows (see also figure 1):

### I. At the originating interface

| | Calling user to network ("SETUP") | Network to calling user ("CONNECT") |
|---|---|---|
| Tf = 0 | Tagging not allowed | Tagging not applied |
| Tf = 1 | Tagging requested | Tagging applied |
| Tb = 0 | Tagging not allowed | Tagging not applied |
| Tb = 1 | Tagging requested | Tagging applied |

### II. At the destination interface

| | Network to called user ("SETUP") | Called user to network ("CONNECT") |
|---|---|---|
| Tf = 0 | Tagging not allowed | (not applicable) |
| Tf = 1 | Tagging requested | (not applicable) |
| Tb = 0 | Tagging not allowed | Tagging not requested |
| Tb = 1 | Tagging allowed | Tagging requested |

The procedures to be performed to use these values to request tagging are described now.

### I. Procedures applicable at the originating interface (at the calling user's end):

The calling user, by use of the Tf and Tb subfields in the ATM Traffic Descriptor information element (part of the datacell header), may indicate 'tagging requested' or 'tagging not allowed' for the forward and backward direction (see Note 1). See Recommendation I.371 for definition of tagging.

When the calling user has indicated in the Tf and Tb subfields 'tagging requested' and the called user requests tagging for the backward direction and the network supports tagging in the forward and backward direction, the network shall upon successful call establishment include an ATM Traffic Descriptor information element in the CONNECT message, and set the Tf and Tb subfields to 'tagging applied', and apply tagging for the user plane traffic in the forward direction and the backward direction.

When the calling user has indicated in Tb subfield 'tagging requested' and the called user does not request tagging for the backward direction and the network supports tagging in the backward direction, the network shall upon successful call establishment not apply tagging in the backward direction, include an ATM Traffic Descriptor information element in the CONNECT message, and set the Tb subfield to 'tagging not applied'.

When the calling user has indicated in Tf subfield 'tagging not allowed' and the network supports tagging in the forward direction, the network shall upon successful call establishment not apply tagging in the forward direction, include an ATM Traffic Descriptor information element in the CONNECT message, and set the Tf subfield to 'tagging not applied'.

When the calling user has indicated in Tb subfield 'tagging not allowed' and the called user requests tagging for the backward direction and the network supports tagging in the backward direction, the network shall upon successful call establishment apply tagging in the backward direction, include an ATM Traffic Descriptor information element in the CONNECT message, and set the Tb subfield to 'tagging applied' (see Note 2).

If the network does not support tagging in the forward and backward direction, the network shall not apply tagging and shall:
- include an ATM Traffic Descriptor information element in the CONNECT message and set the Tf and Tb subfields to 'tagging not applied', or
- not include the Traffic Management Options field in the ATM Traffic Descriptor information element in the CONNECT message, or
- not include the ATM Traffic Descriptor information element in the CONNECT message.

If the network does not support tagging in the forward or backward direction, the network shall not apply tagging and shall include an ATM Traffic Descriptor information element in the CONNECT message and set the Tf or Tb subfield to 'tagging not applied'.

Note 1: The calling user may set the Tb subfield to 'tagging requested' or 'tagging not allowed' to indicate that the called user is invited or warned for requesting tagging for the backward direction.

Note 2: In this case it is up to the application at the calling user to decide to continue or clear the call.

### II. Procedures applicable at the destination interface (at the called user's end):

If the calling user does not include the Traffic Management Options field in the ATM Traffic Descriptor information element and the network supports tagging in the backward direction, the network shall send a SETUP message to the called user and set the subfield Tb to 'tagging allowed' in the ATM Traffic Descriptor information element.

If the calling user indicates in the Tb subfield 'tagging requested' and the network supports tagging in the backward direction, the network shall send a SETUP message to the called user and set the subfield Tb to 'tagging allowed' in the ATM Traffic Descriptor information element.

If the calling user indicates in Tb subfield 'tagging not allowed' and the network supports tagging in the backward direction, the network shall send a SETUP message to the called user and set the subfield Tb to 'tagging not allowed' in the ATM Traffic Descriptor information element.

If the network does not support the tagging option, the network shall not include the Tb subfield in the ATM Traffic Descriptor information element in the SETUP message.

When the called user receives an ATM Traffic Descriptor in the SETUP message with Tb subfield set to 'tagging allowed', the user may upon successful call establishment include an ATM Traffic Descriptor information element in the CONNECT message with the Tb subfield set to 'tagging requested' or 'tagging not requested'.

When the called user receives an ATM Traffic Descriptor in the SETUP message with Tb subfield set to 'tagging not allowed', the user may upon successful call establishment:
- include an ATM Traffic Descriptor information element in the CONNECT message with the Tb subfield set to 'tagging not requested', or
- include an ATM Traffic Descriptor information element in the CONNECT message without the Traffic Management Options field, or
- not include an ATM Traffic Descriptor information element in the CONNECT message.

Upon receipt of the CONNECT message with the Tb subfield set to 'tagging requested' in the ATM Traffic Descriptor information element, the network shall apply tagging for the user plane traffic in the backward direction. In all other cases the network shall not apply tagging.

Note 3: Recently, the solution as discribed above was accepted in the ITU for including in the subsequent part of the Q2961 Recommendation.

## Claims

1. Method for the transmission of datacells via virtual channels of an ATM network system, with a priority code (CLP) as well as a first tagging bit (T_{f}), both being assignable to the datacells of such channel, the network system including bandwidth control devices at network edges, for the enforcement of an allowed cellrate, such bandwidth control device admitting said datacells as long as the actual cellrate does not exceed said allowed cellrate, or, if the actual cellrate does exceed said allowed cellrate, admitting said datacells, however, after modifying its priority code into a lower priority code; for use in a bidirectional set of virtual channels, viz. a first, forward channel from a calling user to a called user and a second, backward channel from the called user to the calling user, a second tagging bit (T_{b}) being assignable to said datacells of the first channel, which second tagging bit relates to said backward channel, **characterized in that**, at the calling user's end:
the calling user, by use of the first tagging bit and second tagging bit, either indicates 'tagging requested' or 'tagging not allowed' for the forward and backward direction;
when the calling user has indicated in the first tagging bit and second tagging bit 'tagging requested' and the called user requests tagging for the backward direction and the network supports tagging in the forward and backward direction, the network shall upon successful call establishment include an information code in the CONNECT message, and set the first tagging bit and second tagging bit subfields to 'tagging applied', and apply tagging for the user plane traffic in the forward direction and the backward direction;
when the calling user has indicated in second tagging bit subfield 'tagging requested' and the called user does not request tagging for the backward direction and the network supports tagging in the backward direction, the network shall upon successful call establishment not apply tagging in the backward direction, include an information code in the CONNECT message, and set the second tagging bit subfield to 'tagging not applied';
when the calling user has indicated in first tagging bit subfield 'tagging not allowed' and the network supports tagging in the forward direction, the network shall upon successful call establishment not apply tagging in the forward direction, include an information code in the CONNECT message, and set the first tagging bit subfield to 'tagging not applied';
when the calling user has indicated in the second tagging bit subfield 'tagging not allowed' and the called user requests tagging for the backward direction and the network supports tagging in the backward direction, the network shall upon successful call establishment apply tagging in the backward direction, include an information code in the CONNECT message, and set the second tagging bit subfield to 'tagging applied';
if the network does not support tagging in the forward and backward direction, the network shall not apply tagging and shall:
- include an information code in the CONNECT message and set the first tagging bit and second tagging bit subfields to 'tagging not applied', or
- not include the Traffic Management Options field in the information code in the CONNECT message, or
- not include the information code in the CONNECT message;
if the network does not support tagging in the forward or backward direction, the network shall not apply tagging and shall include an information code in the CONNECT message and set the first tagging bit or second tagging bit subfield to 'tagging not applied'.

2. Method for the transmission of datacells via virtual channels of an ATM network system, with a priority code (CLP) as well as a first tagging bit (T_{f}), both being assignable to the datacells of such channel, the network system including bandwidth control devices at network edges, for the enforcement of an allowed cellrate, such bandwidth control device admitting said datacells as long as the actual cellrate does not exceed said allowed cellrate, or, if the actual cellrate does exceed said allowed cellrate, admitting said datacells, however, after modifying its priority code into a lower priority code; for use in a bidirectional set of virtual channels, viz. a first, forward channel from a calling user to a called user and a second, backward channel from the called user to the calling user, a second tagging bit (T_{b}) being assignable to said datacells of the first channel, which second tagging bit relates to said backward channel, **characterized in that**, at the called user's end:
if the network supports tagging in the backward direction, the network shall send a SETUP message to the called user and set the subfield second tagging bit to 'tagging allowed' in the information code;
if the calling user indicates in the second tagging bit subfield 'tagging requested' and the network supports tagging in the backward direction, the network shall send a SETUP message to the called user and set the subfield second tagging bit to 'tagging allowed' in the information code;
if the calling user indicates in second tagging bit subfield 'tagging not allowed' and the network supports tagging in the backward direction, the network shall send a SETUP message to the called user and set the subfield second tagging bit to 'tagging not allowed' in the information code;
if the network does not support the tagging option, the network shall not include the second tagging bit subfield in the information code in the SETUP message;
when the called user receives an information code in the SETUP message with second tagging bit subfield set to 'tagging allowed', the called user upon successful call establishment includes an information code in the CONNECT message with the second tagging bit subfield set to either 'tagging requested' or 'tagging not requested';
when the called user receives an information code in the SETUP message with second tagging bit subfield set to
'tagging not allowed', the called user upon successful call establishment either:
- includes an information code in the CONNECT message with the second tagging bit subfield set to 'tagging not requested', or
- includes an information code in the CONNECT message without the Traffic Management Options field, or
- does not include an information code in the CONNECT message; upon receipt of the CONNECT message with the second tagging bit subfield set to 'tagging requested' in the information code, the network shall apply tagging for the user plane traffic in the backward direction; in all other cases the network shall not apply tagging.

## Patentansprüche

1. Verfahren zur Übertragung von Datenzellen über virtuelle Kanäle eines ATM-Netzwerksystems, mit einem Prioritätscode (CLP) und einem ersten Markierungs-Bit (T_{f}), wobei beide Datenzellen eines solchen Kanals zuordbar sind, wobei das Netzwerksystem Bandbreitensteuervorrichtungen an den Netzwerkkanten zur Sicherstellung der erlaubten Zellrate umfasst, wobei eine solche Bandbreitensteuervorrichtung besagte Datenzellen zulässt, solange die tatsächliche Zellrate nicht die besagte erlaubte Zellrate übersteigt, oder, falls die tatsächliche Zellrate die besagte erlaubte Zellrate übersteigt, die besagten Datenzellen nach Modifikation ihres Prioritätscodes in einen geringeren Prioritätscode dennoch zulässt; zum Einsatz in einem bidirektionalen Satz von virtuellen Kanälen, nämlich einem ersten Vorwärtskanal von einem anrufenden Benutzer zu einem angerufenen Benutzer und ein zweiter Rückwärtskanal von dem angerufenen Benutzer zu dem anrufenden Benutzer, wobei sich ein zweites Markierungs-Bit (T_{b}) auf den besagten Rückwärtskanal bezieht, **dadurch gekennzeichnet, dass** auf der Seite des anrufenden Benutzers:
- der anrufende Benutzer durch Einsatz des ersten Markierungs-Bits und des zweiten Markierungs-Bits entweder auf "Markieren angefordert" oder "Markieren nicht erlaubt" für die Vorwärtsrichtung und die Rückwärtsrichtung hinweist,
- wenn der anrufende Benutzer in dem ersten Markierungs-Bit und in dem zweiten Markierungs-Bit auf das "Markieren angefordert" hingewiesen hat und der angerufene Benutzer das Markieren
für die Rückwärtsrichtung anfordert und das Netzwerk das Markieren in der Vorwärts- und der Rückwärtsrichtung unterstützt, das Netzwerk bei einer erfolgreichen Verbindungsherstellung einen Informationscode in der CONNECT-Nachricht einschliessen und das erste Markierungs-Bit und das zweite Markierungs-Bit auf "Markieren angewandt" setzen und das Markieren für den Benutzerebenenverkehr in der Vorwärtsrichtung und der Rückwärtsrichtunq anwenden soll,
- wenn der anrufende Benutzer in dem zweiten Markierungs-Bit-Unterfeld auf das "Markieren angefordert" hingewiesen hat und der angerufene Benutzer das Markieren für die Rückwärtsrichtung nicht anfordert und das Netzwerk das Markieren in der Rückwärtsrichtung unterstützt, das Netzwerk bei erfolgreicher Verbindungsherstellung nicht das Markieren in der Rückwärtsrichtung anwenden, einen Informationscode in der CONNECT-Nachricht einschliessen und das zweite Markierungs-Bit-Unterfeld in den Zustand "Markieren nicht angewandt" setzen soll,
- wenn der anrufende Benutzer im ersten Markierungs-Bit-Unterfeld auf "Markieren nicht erlaubt" hingewiesen hat und das Netzwerk das Markieren in der Vorwärtsrichtung unterstützt, das Netzwerk bei erfolgreicher Verbindungsherstellung nicht das Markieren in der Vorwärtsrichtung anwenden, einen Informationscode in der CONNECT-Nachricht einschliessen und das erste Markierungs-Bit-Unterfeld auf "Markieren nicht angewandt" setzen soll,
- wenn der anrufende Benutzer im zweiten Markierungs-Bit-Unterfeld auf "Markieren nicht erlaubt" hingewiesen hat und der angerufene Benutzer das Markieren für die Rückwärtsrichtung anfordert und das Netzwerk das Markieren in der Rückwärtsrichtung unterstützt, das Netzwerk bei erfolgreicher Verbindungsherstellung das Markieren in der Rückwärtsrichtung anwenden, einen Informationscode in der CONNECT-Nachricht einschliessen und das zweite Markierungs-Bit-Unterfeld auf "Markieren angewandt" setzen soll;
- falls das Netzwerk nicht das Markieren in der Vorwärts- und der Rückwärtsrichtung unterstützt, das Netzwerk das Markieren nicht anwenden soll und
- einen Informationscode in die CONNECT-Nachricht einschliessen und die ersten Markierungs-Bit- und zweiten Markierungs-Bit-Unterfelder auf "Markieren nicht angewandt" setzen soll, oder
- nicht das Verkehrsverwaltungsoptionsfeld in dem Informationscode in der CONNECT-Nachricht einschliessen soll, oder
- nicht den Informationscode in der CONNECT-Nachricht einschliessen soll;
- falls das Netzwerk nicht das Markieren in der Vorwärts- oder Rückwärtsrichtung unterstützt, das Netzwerk nicht das "Markieren anwenden" und einen Informationscode in der CONNECT-Nachricht einschliessen und das erste Markierungs-Bit- oder das zweite Markierungs-Bit-Unterfeld auf "Markieren nicht angewandt" setzen soll.

2. Verfahren zur Übertragung von Datenzellen über virtuelle Kanäle eines ATM-Netzwerksystems, mit einem Prioritätscode (CLP) und einem ersten Markierungs-Bit (T_{f}), wobei beide Datenzellen eines solchen Kanals zuordbar sind, wobei das Netzwerksystem Bandbreitensteuervorrichtungen an den Netzwerkkanten zur Sicherstellung einer erlaubten Zellrate umfasst, wobei eine solche Bandbreitensteuervorrichtung besagte Datenzellen zulässt, solange die tatsächliche Zellrate nicht die besagte erlaubte Zellrate übersteigt, oder, falls die tatsächliche Zellrate die besagte erlaubte Zellrate übersteigt, die besagten Datenzellen nach Modifikation ihres Prioritätscodes in einen geringeren Prioritätscode dennoch zulässt; zum Einsatz in einem bidirektionalen Satz von virtuellen Kanälen, nämlich einem ersten Vorwärtskanal von einem anrufenden Benutzer zu einem angerufenen Benutzer und ein zweiter Rückwärtskanal von dem angerufenen Benutzer zu dem anrufenden Benutzer, wobei ein zweites Markierungs-Bit (T_{b}) besagten Datenzellen des ersten Kanals zuordbar sind, wobei sich das zweite Markierungs-Bit auf den besagten Rückwärtskanal bezieht, **dadurch gekennzeichnet, dass** auf der Seite des angerufenen Benutzers:
- falls das Netzwerk das Markieren in der Rückwärtsrichtung unterstützt, das Netzwerk eine SETUP-Nachricht an den angerufenen Benutzer senden und in dem Informationscode das zweite Markierungs-Bit-Unterfeld auf "Markieren erlaubt" setzen soll;
- falls der anrufende Benutzer in dem zweiten Markierungs-Bit-Unterfeld auf "Markieren angefordert" hinweist und das Netzwerk das Markieren in der Rückwärtsrichtung unterstützt, das Netzwerk eine SETUP-Nachricht an den angerufenen Benutzer senden und in dem Informationscode das zweite Markierungs-Bit-Unterfeld auf "Markieren erlaubt" setzen soll,
- falls der anrufende Benutzer in dem zweiten Markierungs-Bit-Unterfeld auf "Markieren nicht erlaubt" hinweist und das Netzwerk das Markieren in der Rückwärtsrichtung unterstützt, das Netzwerk eine SETUP-Nachricht an den angerufenen Benutzer senden und in dem Informationscode das besagte zweite Markierungs-Bit-Unterfeld auf "Markieren nicht erlaubt" setzen soll;
- falls das Netzwerk nicht die Markierungsoption unterstützt, das Netzwerk das zweite Markierungs-Bit-Unterfeld nicht in dem Informationscode in der SETUP-Nachricht einschliessen soll;
- wenn der angerufene Benutzer einen Informationscode in der SETUP-Nachricht empfängt, wobei das zweite Markierungs-Bit-Unterfeld auf "Markieren erlaubt" gesetzt ist, der angerufene Benutzer bei erfolgreicher Verbindungserstellung einen Informationscode in der CONNECT-Nachricht mit dem zweiten Markierungs-Bit-Unterfeld einschliesst, welches entweder auf "Markieren angefordert" oder "Markieren nicht angefordert" gesetzt ist;
- wenn der angerufene Benutzer einen Informationscode in der SETUP-Nachricht empfängt, wobei das zweite Markierungs-Bit-Unterfeld auf "Markieren nicht erlaubt" gesetzt ist, der Benutzer bei erfolgreicher Verbindungserstellung:
- einen Informationscode in der CONNECT-Nachricht einschliesst, wobei das zweite Markierungs-Bit-Unterfeld auf "Markieren nicht angefordert" gesetzt ist, oder
- einen Informationscode in der CONNECT-Nachricht ohne Verkehrsverwaltungsoptionenfeld einschliesst, oder
- keinen Informationscode in der CONNECT-Nachricht bei Empfang der CONNECT-Nachricht einschliesst, wobei das zweite Markierungs-Bit-Unterfeld in dem Informationscode auf "Markieren angefordert" gesetzt ist, wobei das Netzwerk das Markieren für den Benutzerebenenverkehr in der Rückwärtsrichtung anwenden soll; in allen anderen Fällen soll das Netzwerk kein Markieren anwenden.

## Revendications

1. Procédé permettant la transmission de cellules de données via des canaux virtuels d'un système de réseau ATM (à savoir mode de transfert asynchrone), avec un code de priorité (CLP) ainsi qu'un premier bit de repérage (Tf), tous deux pouvant être attribués aux cellules de données de ce canal, le système de réseau comportant des dispositifs de commande de largeur de bande au niveau des bords du réseau, en vue de l'application d'un débit de cellules autorisé, ce dispositif de commande de largeur de bande admettant lesdites cellules de données pour autant que le débit de cellules réel ne dépasse pas ledit débit de cellules autorisé, ou bien, si le débit de cellules réel dépasse ledit débit de cellules autorisé, admettant lesdites cellules de données, mais, toutefois, après avoir modifié leur code de priorité pour le changer en un code de priorité inférieur ; en vue de l'utilisation dans un ensemble bidirectionnel de canaux virtuels, à savoir un premier canal allant vers l'avant, qui va d'un demandeur à un demandé, et un deuxième canal, allant vers l'arrière, qui va du demandé au demandeur, un deuxième bit de repérage (Tb) pouvant être affecté auxdites cellules de données du premier canal, lequel deuxième bit de repérage concerne ledit canal arrière,
**caractérisé en ce que**, au niveau de l'extrémité correspondant au demandeur :
le demandeur, au moyen du premier bit de repérage et du deuxième bit de repérage, indique "repérage sollicité" ou bien "repérage non autorisé" pour les sens avant et arrière ;
lorsque le demandeur a indiqué dans le premier bit de repérage et le deuxième bit de repérage "repérage sollicité" et que le demandé sollicité le repérage pour le sens arrière, le réseau supportant le repérage dans les sens avant et arrière, alors le réseau va, une fois la communication établie, inclure un code d'information dans le message "Connexion", et positionner les sous-zones du premier bit de repérage et du deuxième bit de repérage sur "repérage appliqué", afin d'appliquer le repérage pour le trafic sur le plan utilisateur, dans le sens avant et le sens arrière ;
lorsque le demandeur a indiqué dans la sous-zone du deuxième bit de repérage "repérage sollicité" et que le demandé n'a pas sollicité de repérage pour le sens arrière, le réseau supportant le repérage dans le sens arrière, alors le réseau va, une fois la communication établie, ne pas appliquer le repérage dans le sens arrière, inclure un code d'information dans le message "Connexion", et positionner la sous-zone du deuxième bit de repérage sur "repérage non appliqué" ;
lorsque le demandeur a indiqué dans la sous-zone du premier bit de repérage "repérage non autorisé", le réseau supportant le repérage dans le sens avant, alors le réseau va, une fois la communication établie ne pas appliquer le repérage dans le sens avant, inclure un code d'information dans le message "Connexion", et positionner la sous-zone du premier bit de repérage sur "repérage non appliqué" ;
lorsque le demandeur a indiqué dans la sous-zone du deuxième bit de repérage "repérage non autorisé et que le demandé sollicite le repérage dans le sens arrière, le réseau supportant le repérage dans le sens arrière, alors le réseau va, une fois la communication établie, appliquer le repérage dans le sens arrière, inclure un code d'information dans le message "Connexion" et positionner la sous-zone du deuxième bit de repérage sur "repérage appliqué" ;
si le réseau ne supporte pas le repérage dans le sens avant et le sens arrière, le réseau n'appliquera pas de repérage et va :
- inclure un code d'information dans le message "Connexion" et positionner les sous-zones du premier bit de repérage et du deuxième bit de repérage sur "repérage non appliqué", ou bien
- ne pas inclure la zone Options de Gestion de Trafic dans le code information du message "Connexion", ou bien
- ne pas inclure le code information dans le message "Connexion" ;
si le réseau ne supporte pas le repérage dans le sens avant ou le sens arrière, le réseau va ne pas appliquer le repérage, inclure un code d'information dans le message "Connexion" et positionner les sous-zones du premier bit de repérage et du deuxième bit de repérage sur "repérage non appliqué".

2. Procédé permettant la transmission de cellules de données via des canaux virtuels d'un système de réseau ATM (à savoir mode de transfert asynchrone), avec un code de priorité (CLP) ainsi qu'un premier bit de repérage (Tf), tous deux pouvant être attribués aux cellules de données de ce canal, le système de réseau comportant des dispositifs de commande de largeur de bande au niveau des bords du réseau, en vue de l'application d'un débit de cellules autorisé, ce dispositif de commande de largeur de bande admettant lesdites cellules de données pour autant que le débit de cellules réel ne dépasse pas ledit débit de cellules autorisé, ou bien, si le débit de cellules réel dépasse ledit débit de cellules autorisé, admettant lesdites cellules de données, mais, toutefois, après avoir modifié leur code de priorité pour le changer en un code de priorité inférieur ; en vue de l'utilisation dans un ensemble bidirectionnel de canaux virtuels, à savoir un premier canal allant vers l'avant, qui va d'un demandeur à un demandé, et un deuxième canal, allant vers l'arrière, qui va du demandé au demandeur, un deuxième bit de repérage (Tb) pouvant être affecté auxdites cellules de données du premier canal, lequel deuxième bit de repérage concerne ledit canal arrière,
**caractérisé en ce que**, à l'extrémité correspondant au demandé :
si le réseau supporte le repérage dans le sens arrière, alors le réseau va envoyer un message Etablissement au demandé et positionner la sous-zone du deuxième bit de repérage sur "repérage autorisé" dans le code d'information ;
si le demandeur indique dans la sous-zone du deuxième bit de repérage "repérage sollicité" et que le réseau supporte le repérage dans le sens arrière, alors le réseau va envoyer un message Etablissement au demandé et positionner la sous-zone du deuxième bit de repérage sur "repérage autorisé" dans le code d'information ;
si le demandeur indique dans la sous-zone du deuxième bit de repérage "repérage non autorisé" et que le réseau supporte le repérage dans le sens arrière, alors le réseau va envoyer un message Etablissement au demandé et positionner la sous zone du deuxième bit de repérage sur "repérage non autorisé" dans le code d'information ;
si le réseau ne supporte pas l'option repérage, alors le réseau va ne pas inclure la sous-zone du deuxième bit de repérage dans le code information du message Etablissement ;
lorsque le demandé reçoit un code d'information dans le message Etablissement où la sous-zone du deuxième bit de repérage est positionnée sur "repérage autorisé", alors le demandé, une fois la communication établie, inclut un code d'information dans le message "Connexion" alors que la sous-zone du deuxième bit de repérage est positionnée sur "repérage sollicité" ou "repérage non sollicité" ;
lorsque le demandé reçoit un code information dans le message Etablissement où la sous-zone du deuxième bit de repérage est positionnée sur "repérage non autorisé", alors le demandé, une fois la communication établie, va :
- inclure un code d'information dans le message "Connexion" où la sous-zone du deuxième bit de repérage est positionnée sur "repérage non sollicité", ou bien
- inclure un code d'information dans le message "Connexion" en l'absence de la zone Options de Gestion de Trafic, ou bien
- ne pas inclure un code d'information dans le message Connexion ;
dès la réception du message "Connexion" où la sous-zone du deuxième bit de repérage est positionnée sur "repérage sollicité" dans le code information, alors le réseau va appliquer le repérage pour le trafic sur le plan utilisateur dans le sens arrière ;
dans tous les autres cas, le réseau ne va pas appliquer de repérage.
